# EUROPEAN PATENT SPECIFICATION

(11) **EP 4 442 652 B1**
(45) Date of publication and mention of the grant of the patent: **02.12.2026**
(21) Application number: 22924758.0
(22) Date of filing: 02.02.2022
(51) Int. Cl.: C02F 1/48, C02F 1/46, B01J 19/08, H05H 1/24

(54) **WATER TREATMENT APPARATUS AND WATER TREATMENT METHOD**
WASSERAUFBEREITUNGSVORRICHTUNG UND VERFAHREN ZUR WASSERAUFBEREITUNG
APPAREIL DE TRAITEMENT DES EAUX ET PROCÉDÉ DE TRAITEMENT DES EAUX

(43) Date of publication of application: 09.10.2024
(73) Proprietor: MITSUBISHI ELECTRIC CORPORATION, Chiyoda-ku Tokyo 100-8310 (JP)
(72) Inventor: ASAI, Kosuke, Tokyo 100-8310 (JP); OINUMA, Gaku, Tokyo 100-8310 (JP)
(74) Representative: Meissner Bolte Partnerschaft mbB
(86) International application number: PCT/JP2022/004074
(87) International publication number: WO 2023/148845

(56) References cited:
- CN-A- 102 531 097
- JP-A- 2010 063 991
- JP-A- 2013 206 767
- JP-B1- 6 765 582
- RU-U1- 195 077

## Description

### Technical Field

The present application relates to a water treatment apparatus and a water treatment method.

### Background Art

Water treatment techniques are known in which water to be treated is caused to flow along an electrode facing a dielectric, and active species such as ozone and hydroxy radicals are generated by electric discharge generated in a space between the water to be treated and the dielectric, thereby performing treatment such as sterilization of the water to be treated (refer to, for example, Patent Document 1 and Non-Patent Document 1). Patent Document 2 relates to a water treatment apparatus comprising cylindrical and linear electrodes. Patent Document 3 discloses a tubular water treatment apparatus made of a dielectric material. Patent Document 4 teaches a water film mixed discharge reactor comprising tubular ground electrode. Patent Document 5 relates to a magnetic plasma treatment reactor for liquids and can be used in water treatment, drinking and industrial water supply, wastewater treatment, and the oxidation of rare-earth metal ions.

### Prior Art Document

### Patent Document

Patent Document 1: Japanese Patent Application Laid-Open No. JP 2013-206767 A (paragraphs 0025 to 0038, FIG. 2, FIG. 7)
Patent Document 2: Japanese Patent Application Laid-Open No. JP 2010 063991 A
Patent Document 3 : Japanese Patent No. JP 6 765582 B1
Patent Document 4 : Chinese Patent Application Laid-Open No. CN 102 531 097 A
Patent Document 5 : Russian Patent Application Laid-Open No. RU 195 077 U1

### Non-Patent Document

Non-Patent Document 1: Niels Wardenier et al., Journal of Hazardous Materials, (USA), 362 (2019) p.238 to 245

### Summary of Invention

### Problems to be Solved by Invention

However, in the above-described water treatment techniques, when the flow rate of the water to be treated is increased in order to treat a large amount of water, part of the water to be treated is scattered in the form of water droplets and adheres to the inner surface of the dielectric. When the water to be treated adheres to the inner surface of the dielectric, a current flows on the inner surface of the dielectric, and thus dielectric barrier discharge cannot be uniformly and stably formed, and the dielectric may be damaged due to localization of the discharge or the like.

On the other hand, in order to form stable dielectric barrier discharge, it is necessary to provide a high voltage electrode only in a region where the water droplets of the water to be treated do not adhere, for example, in the vicinity of the outlet port, and thus the discharge region is reduced and the amount of water that can be treated is limited. Further, if high electric power is concentrated on a reduced discharge region in order to increase the amount of active species to be generated, the temperature of the dielectric rises, and active species useful for the water treatment are decomposed, so that the treatment performance is rather lowered.

Furthermore, even if the amount of the active species to be generated can be increased, the active species has a short life, and therefore, the contact area with the water to be treated is reduced, thereby causing a problem in that efficient water treatment cannot be performed. As a result, the amount of water to be treated is limited, and it is difficult to perform efficient water treatment.

The present application discloses a technique for solving the above-described problems, and an object of the present application is to provide a water treatment apparatus and a water treatment method for efficiently treating water to be treated with a stable operation.

### Means for Solving the Problems

The present invention relates to a water treatment apparatus according to independent claims 1 and 2 and to a water treatment method according to claim 4.

### Advantageous Effect of Invention

According to the water treatment apparatus or the water treatment method disclosed in the present application, the water to be treated flows in the form of a water film along an electrode, and thus, destabilization of dielectric barrier discharge due to adhesion of water droplets to the dielectric can be suppressed, and the water to be treated can be efficiently treated with a stable operation.

### Brief Description of the Drawings

FIG. 1 is a cross-sectional view along an axis for describing a configuration of a water treatment apparatus and a water treatment method according to Embodiment 1.
FIG. 2 is an enlarged cross-sectional view along the axis near a water-film forming portion for describing the configuration of the water treatment apparatus and the water treatment method according to Embodiment 1.
FIG. 3 is an enlarged cross-sectional view along the axis near a water-film forming portion for describing a configuration of a water treatment apparatus and a water treatment method according to Embodiment 2.
FIG. 4 is a cross-sectional view perpendicular to the axis for describing the configuration of the water treatment apparatus and the water treatment method according to Embodiment 2.
FIG. 5 is a cross-sectional view perpendicular to the axis for describing a configuration of a water treatment apparatus and a water treatment method according to a variation of Embodiment 2.
FIG. 6 is a cross-sectional view along the axis for describing a configuration of a water treatment apparatus and a water treatment method according to Embodiment 3.
FIG. 7 is a cross-sectional view along the axis for describing a configuration of a water treatment apparatus and a water treatment method according to Embodiment 4.
FIG. 8 is a cross-sectional view along the axis for describing a configuration of a water treatment apparatus and a water treatment method according to Embodiment 5.

### Mode for Carrying out Invention

### Embodiment 1

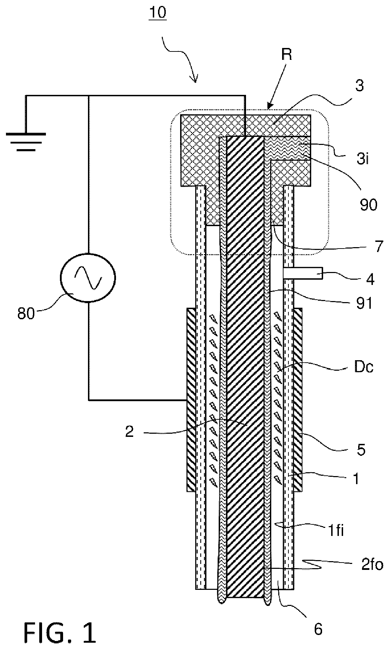

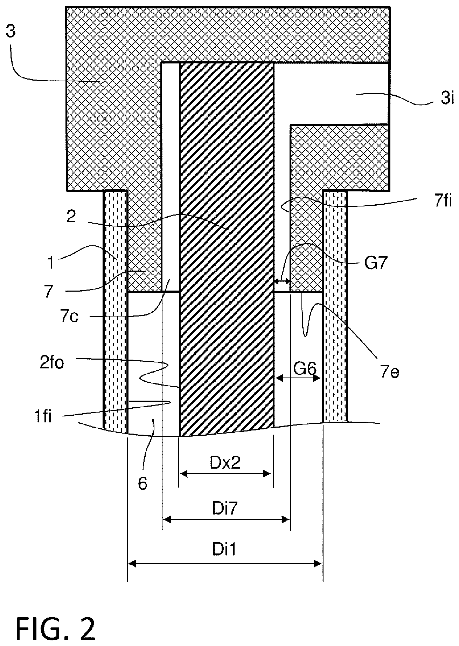

FIG. 1 and FIG. 2 are views for describing a cylindrical water treatment apparatus and a water treatment method according to Embodiment 1. FIG. 1 is a cross-sectional view along an axis for describing a configuration of the water treatment apparatus, and FIG. 2 is a cross-sectional view of a water-film forming portion, which is an enlarged view of a portion corresponding to a region R in FIG. 1.

The water treatment apparatus of the present application is a water treatment apparatus in a flowing water type using dielectric barrier discharge. The dielectric barrier discharge refers to a technique in which one or both of electrodes in a pair facing each other with a gap therebetween are covered with a dielectric, an AC voltage is applied to the electrodes to cause discharge in a gas in the gap, and active species generated by the discharge are brought into contact with water to be treated to perform the treatment.

As shown in FIG. 1, the water treatment apparatus 10 according to Embodiment 1 includes a dielectric 1 in a cylindrical shape having a high voltage electrode 5 on the outer circumferential side, and a ground electrode 2 arranged in a column shape on the same axis with the gap relative to an inner circumferential surface 1fi of the dielectric 1. The dielectric 1 and the ground electrode 2 are fixed to keep a coaxial relationship by a header member 3 arranged at one end in the axial direction.

However, the high voltage electrode 5 is shorter than the dielectric 1 in the axial direction, and is arranged in the middle portion of the dielectric 1 excluding both ends of the dielectric in the axial direction. The high voltage electrode 5 and the ground electrode 2 are electrically connected to a power supply 80, and are configured to cause dielectric barrier discharge (discharge Dc) between the portion of the dielectric 1 where the high voltage electrode 5 is arranged and the ground electrode 2 by a high voltage applied from the power supply 80.

As the dielectric 1, a material that is excellent in electrical insulation and chemically stable is suitable. For example, glass, ceramics, or a resin material can be used. A material that is electrically conductive, chemically stable and has excellent corrosion resistance is suitable for use as the ground electrode 2. For example, stainless steel, titanium (Ti), aluminum (Al), graphite, or the like can be used. The high voltage electrode 5 can be formed, for example, by winding a metal mesh or a metal thin plate around the outer circumferential surface of the dielectric land can also be formed by forming a metal thin film on the outer circumferential surface of the dielectric 1 by a method such as plating or vapor deposition.

The header member 3 is provided with a water intake portion 3i for taking in water to be treated 90 and a water-film forming portion 7 forming an opening along an outer circumferential surface 2fo such that the water to be treated 90 taken in from the water intake portion 3i flows as a water film 91 along the outer circumferential surface 2fo of the ground electrode 2. The header member 3 is formed, for example, by resin molding, and when the ground electrode 2 and the dielectric 1 are fitted in the axial direction, an annular flow path 7c in a ring shape is formed between the outer circumferential surface 2fo of the ground electrode 2 and the water-film forming portion 7. At this time, an internal flow path is formed from the water intake portion 3i to the annular flow path 7c, and one end of the ground electrode 2 is to be exposed for electrical connection.

As the power supply 80, for example, an AC power supply or a pulse power supply can be used. The pulse power supply is effective in forming stable discharge, but is costly. On the other hand, as described later, in the water treatment apparatus 10 of the present application, since the wetting of the inner circumferential surface 1fi of the dielectric 1 by the water droplets is suppressed, a relatively low-cost AC power source can be used, and the cost of the entire apparatus can be suppressed.

Further, a gap portion 6 in a ring shape formed between the dielectric 1 in the cylindrical shape and the ground electrode 2 is a place where the discharge Dc is generated, and also functions as a space for allowing the water to be treated 90 to flow.

As shown in FIG. 2, the water-film forming portion 7 is interposed between the dielectric 1 and the ground electrode 2, and it has an inner circumferential surface 7fi whose inner diameter Di7 is larger than an outer diameter Dx2 of the ground electrode 2 and smaller than the inner diameter Di1 of the dielectric 1, and an outer circumferential surface in close contact with the inner circumferential surface 1fi of the dielectric 1, and thus it is formed in a ring shape.

Therefore, the annular flow path 7c is formed between the inner circumferential surface 7fi of the water-film forming portion 7 and the outer circumferential surface 2fo of the ground electrode 2, the annular flow path 7c being opened in the ring shape at a portion of a tip-end face 7e in a range not reaching the inner circumferential surface 1fi of the dielectric 1. As a result, the water to be treated 90 flows out from the water-film forming portion 7 into the gap portion 6 in the form of the water film 91 along the outer circumferential surface 2fo of the ground electrode 2.

The header member 3 is configured to be arranged on the upper side with the axial direction being vertical such that the water film 91 flowing out from the water-film forming portion 7 flows in the gap portion 6 along the outer circumferential surface 2fo from one end side of the water-film forming portion provided with the header member 3 to the other end side in the axial direction.

Further, a gas introduction part 4 for introducing a gas into the gap portion 6 is provided in a portion of the dielectric 1 located between the water-film forming portion 7 and the high voltage electrode 5 in the axial direction. The gas introduced from the gas introduction part 4 flows in a space formed between the inner circumferential surface 1fi of the dielectric 1 and the water film 91 in the gap portion 6. Therefore, active species such as ozone, hydrogen peroxide, oxygen atoms, and hydroxy radicals generated in the supplied gas by the discharge Dc can be caused to act on the water to be treated 90 (water film 91) to perform water treatment.

Note that a type of the gas introduced from the gas introduction part 4 can be freely determined according to the application. For example, when a gas containing oxygen (oxygen, air, or the like) is supplied, ozone and oxygen atoms can be generated by the discharge Dc. Further, when a rare gas (helium, argon, or the like) is used, hydroxyl radicals (OH) and hydrogen peroxide can be efficiently generated from water vapor evaporated from the water to be treated 90. Further, when a gas containing nitrogen (nitrogen, air, etc.) is used, peroxynitrous acid, peroxynitric acid, etc. having a high sterilization action can be produced.

Here, the "treatment" of the water to be treated 90 means some physical, chemical, and biological changes of the water to be treated 90 caused by the active species generated by the discharge Dc, and corresponds to, for example, sterilization of bacteria, inactivation of viruses, decomposition of organic substances, and the like in the water to be treated 90. Further, for example, it also corresponds to the generation of functional water by dissolving active species generated by the discharge Dc in the water to be treated 90.

In the water-film forming portion 7, the water to be treated 90 supplied from the water intake portion 3i passes through a narrow annular flow path 7c (narrower than the gap portion 6) formed between the water-film forming portion and the outer circumferential surface 2fo of the ground electrode 2, thereby forming the water film 91 flowing down along the surface of the ground electrode 2.

At this time, it is necessary to form a space between the water film 91 and the inner circumferential surface 1fi of the dielectric 1 in the gap portion 6 and to prevent water droplets from adhering to the inner surface (inner circumferential surface 1fi) of the dielectric 1, and thus the thickness of the water film 91 needs to be controlled.

Therefore, an opening range G7 (= (Di7 - Dx2)/2) in the radial direction of the water-film forming portion 7, which is defined by the difference between the inner diameter Di7 of the water-film forming portion 7 and the outer diameter Dx2 of the ground electrode 2, is adjusted.

On the other hand, the size (interval G6 = (Di1 - Dx2)/2) in the radial direction of the gap portion 6 formed between the ground electrode 2 and the dielectric 1 is set to about 1 mm to 5 mm as shown in Expression (1) in order to efficiently perform the dielectric barrier discharge. $1 mm \leq \left(Di 1-Dx2\right) / 2 \leq 5 mm$ (1)

If the interval G6 is less than 1 mm, the water to be treated 90 may adhere to the dielectric 1 due to slight waving of the water film 91, and stable discharge may not be performed. If the interval G6 is made thicker than the 5 mm, a very high voltage is required for forming the discharge Dc, which causes problems of an increase in cost of the power supply 80 and an increase in size of the apparatus due to an increase in the insulating distance.

The water film 91 needs to be made thinner than the interval G6 of the gap portion 6 that is narrow, and is preferably 0.1 mm or more and 3 mm or less. In order to make the film thickness of the film 91 less than 0.1 mm, the flow rate of the water to be treated 90 must be significantly reduced, and thus, water treatment in a large flow rate cannot be performed. Further, if the water film 91 is thicker than 3 mm, waving of the water surface significantly occurs, and the water droplets may adhere to the inner circumferential surface 1fi of the dielectric 1.

Further, it is preferable that the water film 91 should be thinner than the thickness of the space formed between the water film 91 and the inner circumferential surface 1fi (= interval G6 - thickness of water film 91). If the thickness of the water film 91 is larger than the thickness of the space, a problem arises in that the water to be treated 90 is electrostatically attracted to the dielectric 1 side when a voltage is applied to the high voltage electrode 5, and adheres to the dielectric 1. In contrast, this problem hardly occurs when the thickness of the water film 91 is smaller than the thickness of the space.

Therefore, the opening range G7 between the water-film forming portion 7 and the ground electrode 2 needs to be set to a value smaller than the interval G6. In particular, the opening range G7 is preferably set to be 0.1 mm or more and 3 mm or less (Expression 2). Further, the inner circumferential surface 7fi of the water-film forming portion 7 is preferably located closer to the outer circumferential surface 2fo of the ground electrode 2 than the inner circumferential surface 1fi of the dielectric 1. $0.1 mm \leq G 7 \leq 3 mm$ (2)

As described above, the thicknesses of the water film 91 is controlled using the difference (opening range G7) between the inner diameter Di7 of the water-film forming portion 7 and the outer diameter Dx2 of the ground electrode 2, and thus, in the case of achieving the same opening range G7, the larger outer diameter Dx2 of the ground electrode 2 is preferred. This is because a flow path cross-sectional area (= (Di7² - Dx2²) × π/4) of the water-film forming portion 7 is increased, and the flow rate of the water to be treated 90 can be increased.

However, when the flow rate is increased, the water droplets are likely to scatter, and therefore, the interval G6 of the gap portion 6 needs to be set to be wider.

On the premise of the above-described configuration, the operation of the water treatment apparatus 10, that is, a water treatment method will be described. A gas is supplied at a predetermined flow rate from the gas introduction part 4, and the power supply 80 is operated to apply a high voltage between the high voltage electrode 5 and the ground electrode 2. Thus, the discharge Dc is formed in the range where the high voltage electrode 5 is arranged in the axial direction in the gap portion 6.

On the other hand, the water to be treated 90 supplied to the water intake portion 3i passes through the internal flow path formed in the header member 3, and is discharged from the annular flow path 7c in the ring shape in the water-film forming portion 7 toward the gap portion 6. At this time, the water to be treated 90 flows down along the axial direction on the outer circumferential surface 2fo of the ground electrode 2 as the water film 91 in the gap portion 6. Therefore, active species such as ozone, hydrogen peroxide, oxygen atoms, and hydroxy radicals generated by the discharge Dc act on the water to be treated 90 in the form of the water film 91, whereby the water to be treated 90 is processed.

Since the water to be treated 90 covers the outer circumferential surface 2fo of the ground electrode 2 as the water film 91, the contact area between the active species and the water to be treated 90 can be increased, and even short-lived active species such as oxygen atoms and hydroxy radicals can be effectively utilized to enhance the efficiency in the water treatment. Further, since the water to be treated 90 is prevented from scattering in the form of water droplets, a wide discharge area can be formed in the direction in which the water to be treated 90 flows down. This suppresses a local temperature rise and suppresses thermal decomposition of ozone, hydrogen peroxide, and the like that are useful for the water treatment, thereby enabling efficient water treatment.

Note that, also in the following embodiments, the gas introduction part 4 is not necessarily formed in the dielectric 1 as shown in FIG. 1, but may be formed in the header member 3. In this case, for example, an gas outlet port to the gap portion 6 should be arranged downstream to the opening of the water-film forming portion 7 or along the inner circumferential surface 1fi of the dielectric 1. This can prevent the generation of water droplets due to the mixing of the gas and the water to be treated 90.

### Embodiment 2

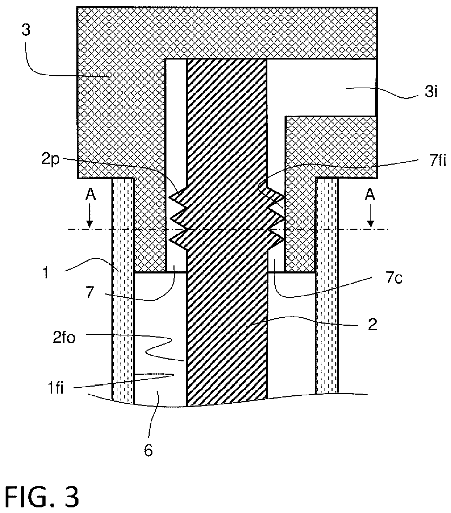

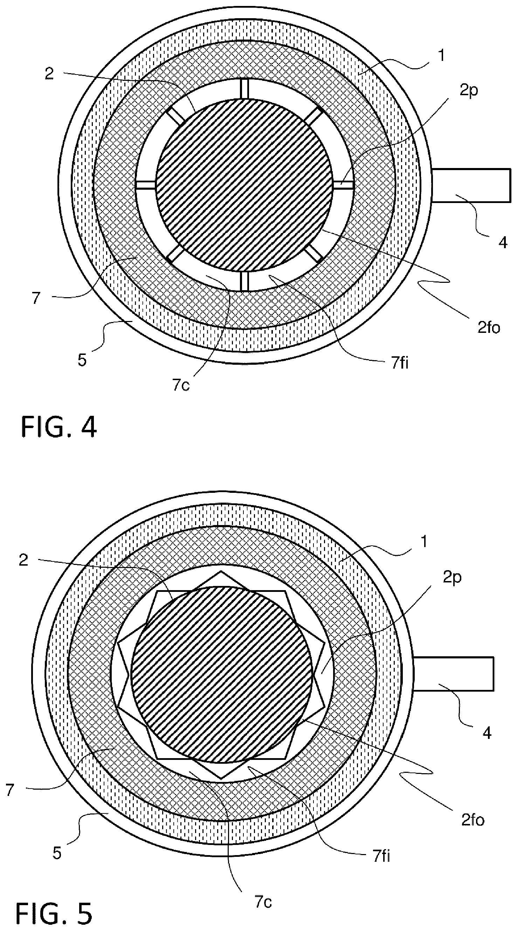

In a water treatment apparatus according to Embodiment 2, an example in which a protruded portion having a rectifying action is formed on a portion of the outer circumferential surface of the ground electrode facing the inner circumferential surface of the water-film forming portion will be described. FIG. 3 and FIG. 4 are for describing a configuration of a water treatment apparatus according to Embodiment 2, FIG. 3 is a cross-sectional view corresponding to FIG. 2 of Embodiment 1, showing a water-film forming portion in an enlarged manner for describing the configuration of the water treatment apparatus, and FIG. 4 is a cross-sectional view that is taken along a line A-A of FIG. 3 and is perpendicular to the axis of the water treatment apparatus. FIG. 5 is a cross-sectional view of a water treatment apparatus according to a variation, which is perpendicular to the axis and corresponds to FIG. 4.

Note that Embodiment 2 is the same as Embodiment 1 except that the ground electrode is provided with the protruded portion and the description of the same portions will be omitted, and the configuration including the power supply in FIG. 1 used in the description in Embodiment 1, the opening range of the water-film forming portion in FIG. 2, and the like will be referred to.

As shown in FIG. 3 and FIG. 4, the water treatment apparatus 10 according to Embodiment 2 is provided with a protruded portion 2p at a position of the outer circumferential surface 2fo of the ground electrode 2 with which the annular flow path 7c is formed by facing the inner circumferential surface 7fi of the water-film forming portion 7 in the axial direction. The protruded portion 2p has a plurality of rib-like structures radially protruding from the outer circumferential surface 2fo of the ground electrode 2.

**In** Embodiment 1, the water film 91 is formed by the flow of the water to be treated 90 in the narrow annular flow path 7c formed between the outer circumferential surface 2fo of the ground electrode 2 and the inner circumferential surface 7fi of the water-film forming portion 7. However, when the flow rate (flow velocity) of the water to be treated 90 is high, waving of the surface of the water film 91 may occur due to a pressure change between the inside and the outside of the water-film forming portion 7, etc., and the water to be treated 90 may adhere to the dielectric 1.

**In** contrast, in Embodiment 2, the flow of the water to be treated 90 is rectified by the presence of the protruded portion 2p in the annular flow path 7c, and thus the waving of the water film 91 is suppressed. Therefore, even at a higher flow rate of the water to be treated 90, the discharge Dc can be stably formed and the treatment can be performed.

Note that the protruded portion 2p is not limited in the shape to a plurality of radially protruding rib-like structures shown in FIG. 4. For example, as shown in a water treatment apparatus 10 according to a variation of FIG. 5, the protruded portion 2p may be formed by a plurality of mountain-shaped protruded portions radially protruding from the outer circumferential surface 2fo of the ground electrode 2.

Further, an appropriate design can be made as far as the flow regulation effect of the water to be treated 90 can be obtained. Furthermore, the protruded portion 2p is not necessarily formed integrally with the ground electrode 2, and may be formed by fastening or joining a separate member to the ground electrode 2.

### Embodiment 3

**In** Embodiment 1 and Embodiment 2, the examples have been described in which only the path along the outer circumferential surface of the columnar ground electrode is provided as the flow path of the water to be treated in the gap portion. **In** Embodiment 3, an example will be described in which a ground electrode formed of a porous material in a circular tube is used and a flow path of the water to be treated is formed also inside the ground electrode.

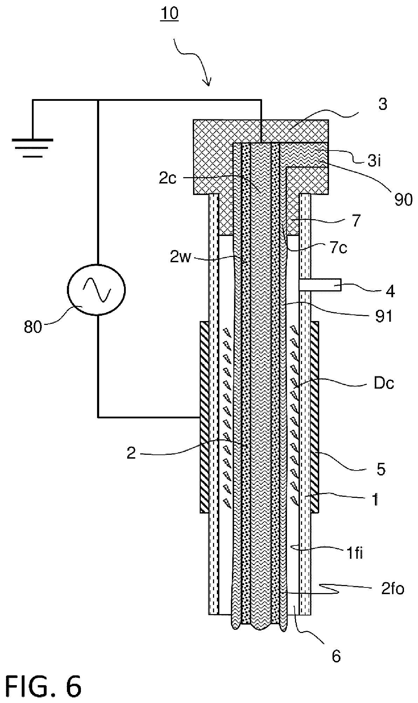

FIG. 6 is a cross-sectional view along an axis for describing a configuration of a water treatment apparatus according to Embodiment 3. Note that Embodiment 3 is the same as Embodiment 1 except that the ground electrode is formed of a porous material in a circular tube, and therefore, the description of the same portions will be omitted, and the opening range of the water-film forming portion in FIG. 2, and the like used in Embodiment 1 will be referred to.

As shown in FIG. 6, the water treatment apparatus 10 according to Embodiment 3 is such that the ground electrode 2 of a porous material is configured in a circular tube in which a water conduit 2c is formed to penetrate the ground electrode in the axial direction. The other configurations and the operation are the same as those of Embodiment 1.

As a porous material forming the ground electrode 2, for example, a member obtained by molding a metal mesh, a punching metal, or the like (in a plate material or a sheet material) into a circular tube shape can be used. Alternatively, the ground electrode 2 can be formed by making a plurality of through holes in the radial direction in a metal tube or can be formed of a sintered metal.

In Embodiment 3, the water to be treated 90 supplied from the water intake portion 3i to the internal flow path of the header member 3 not only flows down along the annular flow path 7c but also enters the water conduit 2c through pores in a tube wall 2w of the ground electrode 2 and flows down in the water conduit 2c.

When the discharge Dc is generated in the gap portion 6 in such a configuration, the short-lived active species such as oxygen atoms and hydroxy radicals among the active species generated by the discharge Dc locally act on the water to be treated 90 in the vicinity of the surface of the water film 91. On the other hand, long-lived active species such as ozone and hydrogen peroxide are dissolved in the water to be treated 90 from the surface of the water film 91 and diffused into the water to be treated 90 flowing in the water conduit 2c through the pores of the porous material forming the ground electrode 2, whereby a wide range of treatment is performed.

When the columnar ground electrode 2 is used as in Embodiment 1 and Embodiment 2, the region where the water to be treated 90 flows is limited to the surface (outer circumferential surface 2fo) of the ground electrode 2. Although this is effective in efficiently causing the short-lived active species to act on the water to be treated, there is a problem in that the flow rate of the water to be treated 90 is relatively low.

In contrast, in Embodiment 3, the water to be treated 90 flows not only on the surface of the ground electrode 2 but also flows the inside thereof (water conduit 2c), and therefore the flow rate can be increased. At this time, the water to be treated 90 flowing inside the ground electrode 2 can also be efficiently treated by the action of the long-lived active species.

### Embodiment 4

In Embodiment 1 to Embodiment 3, the examples have been described in which the outer diameter of the ground electrode is constant along the axial direction. In Embodiment 4, an example will be described in which an inclined portion where the outer diameter of the ground electrode changes along the axial direction is provided.

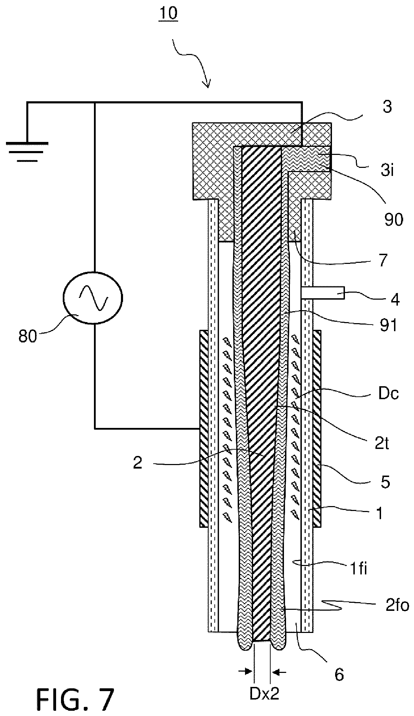

FIG. 7 is a cross- sectional view along the axis for describing a configuration of a water treatment apparatus according to Embodiment 4. Note that Embodiment 4 is the same as Embodiment 1 except that the ground electrode is provided with the inclined portion, and the description of the same portions is omitted, and FIG. 2 used in Embodiment 1 is also referred to.

As shown in FIG. 7, in the water treatment apparatus 10 according to Embodiment 4, the ground electrode 2 has, in the region where the high voltage electrode 5 is formed in the axial direction, an inclined portion 2t in which the outer diameter Dx2 of the ground electrode 2 decreases along the direction in which the water to be treated 90 flows down. Other structures and the operation are the same as those of Embodiment 1.

For example, when the ground electrode 2 having a constant outer diameter Dx2 as exemplified in Embodiment 1 to Embodiment 3 is used, the water film 91 becomes thicker toward the downstream side (lower side in the figure) due to fluid resistance action when the water to be treated 90 flows down along the outer circumferential surface 2fo of the ground electrode 2. Therefore, a gap (discharge distance) of the space formed between the water film 91 and the inner circumferential surface 1fi of the dielectric 1 is narrowed toward the downstream side, and the discharge Dc may be nonuniform between the upstream side and the downstream side.

In addition, when the region (discharge region) in which the discharge Dc is generated in the axial direction is extended, the water to be treated 90 adheres to the dielectric 1 on the downstream side where the gap is narrowed, and thus the possibility that normal discharge cannot be performed increases.

In contrast, according to Embodiment 4, the inclined portion 2t in which the outer diameter Dx2 decreases toward the downstream side is provided in a portion corresponding to the discharge region in the ground electrode, so that the change in the thickness of the water film 91 along the flow direction is compensated to be able to keep the discharge distance constant in the discharge region. Therefore, the discharge Dc can be stably formed in a wider region, and the increase in the treatment flow rate can be achieved.

Note that the range (length in the axial direction) and inclination of the inclined portion 2t can be appropriately designed in accordance with the range of the discharge region and the flow rate of the water to be treated 90. In addition, the formation of the inclined portion 2t is not limited to the portion facing the high voltage electrode 5 as shown in FIG. 7, and may be appropriately designed as long as the stable discharge Dc can be formed. That is, the setting range of the inclined portion 2t in the axial direction may be longer or shorter than that of the high voltage electrode 5.

### Embodiment 5

In Embodiment 1 to Embodiment 4, the examples have been described in which the high voltage electrode is continuously present in the axial direction. In Embodiment 5, an example will be described in which the high voltage electrodes are intermittently arranged along the axial direction.

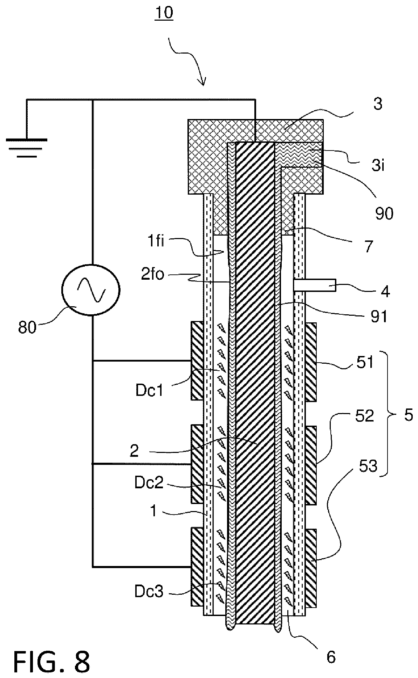

FIG. 8 is a cross-sectional view along the axis for describing a configuration of a water treatment apparatus according to Embodiment 5. Note that Embodiment 5 is the same as Embodiment 1 except that the high voltage electrodes are intermittently arranged along the axial direction, and therefore, the description of the same portions will be omitted and FIG. 2 used in Embodiment 1 will be referred to.

In the water treatment apparatus 10 according to Embodiment 5, as shown in FIG. 8, three electrodes (first electrode 51, second electrode 52, and third electrode 53) are intermittently arranged as the high voltage electrode 5 on the outer circumferential surface of the dielectric 1 along the flow direction (axial direction: vertical direction in FIG. 8) of the water to be treated 90. That is, the multiple electrodes (first electrode 51, second electrode 52, and third electrode 53) are arranged at intervals to each other in order from the upstream side of the flow of the water to be treated 90.

Thus, a discharge Dc1, a discharge Dc2, and a discharge Dc3 are formed at respective positions corresponding to the first electrode 51, the second electrode 52, and the third electrode 53. The other structures and operation are the same as those of Embodiment 1.

For example, when the high voltage electrode 5 continuous in the axial direction as exemplified in Embodiment 1 to Embodiment 4 is used to extend the installation range in the axial direction, the water film 91 is disturbed by the influence of the external electric field for forming the discharge Dc, and the water surface is likely to wave as the water film flows downstream. As a result, it is considered that water droplets are likely to adhere to the dielectric 1.

In contrast, in Embodiment 5, since the multiple electrodes (first electrode 51, second electrode 52, and third electrode 53) are intermittently arranged along the flow direction of the water to be treated 90, the installation range per electrode is narrower than in the case of using the continuous high voltage electrode 5.

Therefore, even when the water film 91 is disturbed at each electrode, the water surface of the water film 91 is stabilized again in the region where the high voltage electrode 5 is not arranged, that is, in the region where no external electric field exists. This effect makes it possible to suppress adhesion of the water to be treated 90 to the dielectric 1 and form a stable discharge Dc even when a dielectric barrier discharge is generated in a wide region as the discharge Dc (discharge Dc1 + discharge Dc2 + discharge Dc3).

Furthermore, although various exemplary embodiments and examples are described in the presentapplication, various features, aspects, and functions described in one or more embodiments are not inherent in an application of the contents disclosed in a particular embodiment, and can be applicable alone or in their various combinations to each embodiment. Accordingly, countless variations that are not illustrated are envisaged within the scope of the art disclosed in the specification of the present application. For example, the case where at least one component is modified, added or omitted, and the case where at least one component is extracted and combined with a component disclosed in another embodiment are included.

For example, in the present application, the examples have been shown in which the high voltage electrode 5 is arranged on the outer circumferential side so as to surround the ground electrode 2 arranged at the axial center, but this is not a limitation. The high voltage electrode may be on the axial center side and the ground electrode may be on the outer circumferential side. Further, the examples have been shown in which the dielectric 1 is arranged on the inner circumferential surface side of the outer circumferential side electrode (high voltage electrode 5 in the above example), and the water film 91 is formed along the outer circumferential surface (outer circumferential surface 2fo) of the axial center side electrode (ground electrode 2 in the above example), but this is not a limitation. The dielectric may be arranged along the outer circumferential surface of the electrode on the axial center side, and the water film 91 may be formed along the inner circumferential surface of the electrode on the outer circumferential side.

Further, a dielectric may be arranged on each of the both pole electrodes, and the water film 91 may be formed on at least a side facing one of the dielectrics. Further, in the case where the dielectric is arranged along the inner circumferential surface of the electrode on the outer circumferential side, when a transparent material such as quartz is used, the formation state of the water film 91 and the scattering state of the water droplets can be easily observed from the outside of the apparatus. Therefore, for example, by adjusting the amount of water while checking the state of the water film 91, the treatment amount of the water to be treated 90 can be readily increased to an upper limit at which water droplets do not scatter.

Further, as the water treatment method, the example of using the water treatment apparatus 10 in the cylindrical shape capable of achieving the flow control of water and gas in a simple configuration has been described, but this is not a limitation. **In** its essence, the water film 91 thinner than the interval G6 is formed on the electrode (ground electrode 2) facing the dielectric 1 that is spaced apart with the interval G6 and causes to generate the dielectric barrier discharge, and the water film 91 is made to flow along the surface (outer circumferential surface 2fo) of the electrode. Therefore, when the active species generated by the dielectric barrier discharge is caused to act on the water to be treated 90, the flow control of water and gas may be complicated, but the water treatment method of the present application can be applied regardless of the electrode shape such as a parallel plate.

As described above, the water treatment apparatus 10 of the present application includes the first electrode (for example, ground electrode 2) extending in the axial direction, the second electrode (for example, high voltage electrode 5) arranged coaxially with the first electrode so as to surround the first electrode from the outside in the radial direction, the dielectric 1 that is formed in a cylindrical shape, is coaxially arranged and interposed between the first electrode and the second electrode, forms an annular gap (gap portion 6) between the dielectric and the one electrode (for example, ground electrode 2) of the first electrode and the second electrode, and causes to generate dielectric barrier discharge by applying a voltage between the one electrode and the other electrode, and the water-film forming portion 7 that forms the annular flow path 7c along a circumferential direction between the water-film forming portion and the one electrode (for example, ground electrode 2) on one end side in an axial direction with an opening toward the annular gap (gap portion 6) at a narrower spacing (opening range G7) than the annular gap (gap portion 6) and causes water to be treated 90 to flow down toward the other end side as the water film 91 covering the one electrode (outer circumferential surfaces 2fo of the grand electrode 2) when the one end side is directed upward to set the axial direction to be vertical.

Therefore, since the water to be treated 90 flows down along the surface of the electrode (outer circumferential surface 2fo) as the water film 91 thinner than the interval G6 of the gap portion 6, the instability of the dielectric barrier discharge due to the adhesion of the water droplets to the dielectric 1 can be suppressed, and the water to be treated 90 can be efficiently processed by the stable operation.

When the interval G6 between the one electrode (for example, ground electrode 2) and the dielectric 1 is equal to or larger than 1 mm and equal to or smaller than 5 mm, it is not necessary to apply an excessive voltage, and it is possible to effectively suppress the scattering of water droplets to the dielectric 1, and thus a stable and efficient dielectric barrier discharge (Dc) can be formed.

In particular, when a spacing of the opening (opening range G7) is equal to or larger than 0.1 mm and equal to or smaller than 3 mm, the thickness of the water film 91 can be controlled to be 0.1 mm or more and 3 mm or less. As a result, the water droplets are not scattered on the dielectric 1, and the water to be treated 90 can be processed with a high throughput.

Further, the other electrode (for example, high voltage electrode 5) is arranged to be spaced apart from the water-film forming portion 7 in the axial direction, and the gas introduction part 4 for supplying a gas to the space formed between the water film 91 and the dielectric 1 is provided between the water-film forming portion 7 and the other electrode (high voltage electrode 5) in the axial direction, and thus the type of active species to be generated can be controlled by the type of gas to be introduced.

Further, if the one electrode (ground electrode 2) is provided with the protruded portion 2p protruding toward the annular flow path 7c in the region where the annular flow path 7c is formed, even if the flow rate of the water to be treated 90 increases, the waving of the water film 91 is suppressed by the rectifying action of the protruded portion 2p, and the scattering of the water droplets to the dielectric 1 can be more efficiently suppressed.

Alternatively, in the region of the one electrode (ground electrode 2) facing the other electrode (high voltage electrode 5), when the inclined portion 2t whose diameter changes along the axial direction is provided such that the interval G6 between the one electrode and the dielectric increases along the flow direction, the increase in the thickness of the water film 91 along the flow direction is compensated to be able to keep the discharge distance constant in the discharge region. Therefore, the discharge Dc can be stably formed in a wider region, and the increase in the treatment flow rate can be achieved.

In addition, when the other electrode (high voltage electrode) is configured with multiple electrodes (first electrode 51 to third electrode 53) spaced apart from each other in the axial direction, even when the water film 91 is disturbed by the electric field at each of the electrodes, the water surface of the water film 91 is stabilized again in a region where no external electric field exists before the water film 91 passes by the next electrode. This effect makes it possible to suppress the adhesion of the water to be treated 90 to the dielectric 1 and form the stable discharge Dc even when the dielectric barrier discharge is generated in a wide region as the discharge Dc (discharge Dc1 + discharge Dc2 + discharge Dc3).

Here, if the above-described one electrode (the electrode facing the dielectric 1 with the interval therebetween) is the first electrode (for example, the ground electrode 2) located on the axial center side, the water film 91 covers the outer circumferential surface 2fo. Therefore, when a transparent dielectric 1 such as quartz glass is used, the surface of the water film 91 can be observed from the outside in the radial direction through the dielectric 1, and adjusting of the thickness of the water film 91 can be readily performed.

In this case, when the configuration is such that the first electrode located on the axial center side is formed in a circular tube by forming the water conduit 2c that passes through in the axial direction on the inner side in the radial direction, and at least part of the tube wall 2w is formed of a porous material from the outer circumferential surface 2fo to the water conduit 2c, long-lived active species such as ozone and hydrogen peroxide are dissolved in the water to be treated 90 from the surface of the water film 91 and diffused into the water to be treated 90 flowing in the water conduit 2c through the pores of the porous material forming the ground electrode 2. Thus, the long-lived active species can be effectively used to perform a wide range of treatment, and the flow rate of the water to be treated 90, that is, the treatment amount can be increased.

As described above, the water treatment method of the present application is a water treatment method using the water treatment apparatus 10 in which two electrodes (grand electrode 2 and high voltage electrode 5) and the dielectric 1 arranged between the two electrodes are provided, and the gap (gap portion 6) extending with a constant interval is formed between the one electrode (for example, outer circumferential surface 2fo of the grand electrode 2) of the two electrodes and the dielectric 1.

The water treatment method includes steps of generating active species by applying a voltage between the two electrodes to cause dielectric barrier discharge (discharge Dc), introducing the water to be treated 90 from the one end side in the extending direction of the gap, and causing the generated active species to act on the introduced water to be treated 90. In the step of introducing the water to be treated 90, the one end side is directed upward to set the extending direction to be vertical, and the water to be treated 90 is made to flow down toward the other end side as the water film 91 that has a thickness smaller than the constant interval G6 and covers the one electrode (outer circumferential surface 2fo).

Therefore, the water to be treated 90 flows along the outer circumferential surface 2fo in the form of the water film, and thus, it is possible to suppress instability of the dielectric barrier discharge due to adhesion of the water droplets to the dielectric 1 and to efficiently treat the water to be treated 90 with a stable operation.

### Description of Reference Numerals and Signs

- 1:: dielectric,
- 1fi:: inner circumferential surface,
- 2:: ground electrode,
- 2c:: water conduit,
- 2fo:: outer circumferential surface,
- 2p:: protruded portion,
- 2t:: inclined portion,
- 3:: header member,
- 3i:: water intake portion,
- 4:: gas introduction part,
- 5:: high voltage electrode,
- 6:: gap portion,
- 7:: water-film forming portion,
- 7c:: annular flow path,
- 10:: water treatment apparatus,
- 80:: power supply,
- 90:: water to be treated,
- 91:: water film,
- Dc:: discharge,
- Di1:: inner diameter (of dielectric),
- Di7:: inner diameter (of water-film forming portion),
- Dx2:: outer diameter (of ground electrode),
- G7:: opening range,
- G6:: gap

## Claims

1. A water treatment apparatus (10) comprising:
- a first electrode (2) extending in an axial direction;
- a second electrode (5) arranged coaxially with the first electrode (2) so as to surround the first electrode (2) from an outside in a radial direction;
- a power supply (80) that is electrically connected to the first electrode (2) and the second electrode (5) and apply a high voltage between the first electrode (2) and the second electrode (5) wherein the power supply (80) is an AC power supply or a pulse power supply;
- a dielectric (1) that is formed in a cylindrical shape, is coaxially arranged and interposed between the first electrode (2) and the second electrode (5), forms an annular gap (6) with one electrode of the first electrode (2) and the second electrode (5), and causes to generate dielectric barrier discharge by applying the high voltage between the one electrode and an another electrode;
- a water-film forming portion (7) that forms an annular flow path (7c) along a circumferential direction between the water-film forming portion (7) and the one electrode on one end side in an axial direction with an opening toward the annular gap (6), wherein the opening of the annular flow path (7c) has an opening range (G7) that is narrower than an interval (G6) in the radial direction of the annular gap (6), wherein an interval (G6) between the one electrode and the dielectric (1) is equal to or larger than 1 mm and equal to or smaller than 5 mm, wherein a spacing of the opening (G7) is equal to or larger than 0.1 mm and equal to or smaller than 3 mm, wherein the water-film portion (7) causes water to be treated (90) to flow down toward the other end side as a water film (91) covering the one electrode when the one end side is directed upward to set an axial direction to be vertical, wherein the water film (91) is thinner than the thickness of the space formed between the water film (91) and a circumferential surface (1fi) of the dielectric (1); and
- a gas introduction part (4) for introducing gas into the annular gap (6), wherein the high voltage applied to the electrodes cause discharge in the gas and active species generated by the discharge are brought into contact with water to be treated to perform the treatment;
wherein
a header member (3) is provided with a water intake portion (3i) for taking in water to be treated (90) and the water-film forming portion (7) forming an opening along a circumferential surface (2fo) such that the water to be treated is taken from the water intake portion (3i) flows as the water film (91) along a outer circumferential surface (2fo) of the one electrode, wherein the dielectric (1) and the one electrode are fixed to keep a coaxial relationship by the header member (3) arranged at one end in the axial direction, wherein an internal flow path is formed from the water intake portion (3i) to the annular flow path (7c);
wherein (i) a circumferential surface (7fi) of the water-film forming portion (7) facing the one electrode is located closer to the circumferential surface (2fo) of the one electrode than the circumferential surface (1fi) of the dielectric (1);
or wherein (ii) the one electrode is provided with a protruded portion (2p) protruding toward the annular flow path (7c) in a region where the annular flow path (7c) is formed-;
or wherein (iii) in a region of the one electrode facing the another electrode, an inclined portion (2t) whose diameter changes along the axial direction is provided such that the interval between the one electrode and the dielectric increases along a flow direction.

2. A water treatment apparatus (10) comprising:
- a first electrode (2) extending in an axial direction;
- a second electrode (5) arranged coaxially with the first electrode (2) so as to surround the first electrode (2) from an outside in a radial direction;
- a power supply (80) that is electrically connected to the first electrode (2) and the second electrode (5) and apply a high voltage between the first electrode (2) and the second electrode (5) wherein the power supply (80) is an AC power supply or a pulse power supply;
- a dielectric (1) that is formed in a cylindrical shape, is coaxially arranged and interposed between the first electrode (2) and the second electrode (5), forms an annular gap (6) with one electrode when the first electrode (2) is the one electrode and the second electrode (5) is an another electrode, and causes to generate dielectric barrier discharge (Dc) by applying the high voltage between the one electrode and the another electrode; and
- a water-film forming portion (7) that forms an annular flow path (7c) along a circumferential direction between the water-film forming portion (7) and the one electrode on one end side in an axial direction with an opening toward the annular gap (6), wherein the opening of the annular flow path (7c) has an opening range (G7) that is narrower than an interval (G6) in the radial direction of the annular gap (6), wherein an interval (G6) between the one electrode and the dielectric (1) is equal to or larger than 1 mm and equal to or smaller than 5 mm, wherein a spacing of the opening (G7) is equal to or larger than 0.1 mm and equal to or smaller than 3 mm, wherein the water-film portion (7) causes water to be treated (90) to flow down toward the other end side as a water film (91) covering the one electrode when the one end side is directed upward to set an axial direction to be vertical, wherein the water film (91) is thinner than the thickness of the space formed between the water film (91) and an inner circumferential surface (1fi) of the dielectric (1) ; and
- a gas introduction part (4) for introducing gas into the annular gap (6), wherein the high voltage applied to the electrodes cause discharge in the gas and active species generated by the discharge are brought into contact with water to be treated to perform the treatment;
wherein
the first electrode (2) is formed in a circular tube by forming a water conduit (2c) that passes through in an axial direction on an inner side in a radial direction, and at least part of a wall (2w) of the tube is formed of a porous material from an outer circumferential surface to the water conduit (2c), wherein the water conduit (2c) is formed in the porous material; and wherein a header member (3) is provided with a water intake portion (3i) for taking in water to be treated (90), wherein the water to be treated (90) flows along the annular flow path (7c) and enters the water conduit (2c) through pores in the wall (2w) and flows in the water conduit (2c).

3. The water treatment apparatus (10) according to any one of claims 1 to 2, wherein the another electrode is configured with a plurality of arranged electrodes (51-53) spaced apart from each other in the axial direction.

4. A water treatment method using a water treatment apparatus (10) according to any one of the preceding claims, the water treatment method comprising steps of:
- generating active species by applying a high voltage between the first electrode and the second electrode to cause dielectric barrier discharge (Dc);
introducing water to be treated (90) from one end side in an extending direction of the gap; and
- causing the generated active species to act on the introduced water to be treated (90),
wherein,
in the step of introducing the water to be treated (90), with the one end side directed upward to set the extending direction to be vertical and wherein the dielectric (1) and the one electrode are fixed to keep a coaxial relationship by a header member (3) arranged at one side in the axial direction, the water to be treated (90) is made to flow down toward the other end side as a water film (91) that has a thickness smaller than a half of an interval (G6) between the one electrode and the dielectric covers the one electrode.

## Patentansprüche

1. Wasseraufbereitungsvorrichtung (10), die das Folgende aufweist:
- eine erste Elektrode (2), die sich in einer axialen Richtung erstreckt;
- eine zweite Elektrode (5), die koaxial mit der ersten Elektrode (2) angeordnet ist, sodass sie die erste Elektrode (2) von außen in einer radialen Richtung umgibt;
- eine Stromversorgung (80), die elektrisch mit der ersten Elektrode (2) und der zweiten Elektrode (5) verbunden ist und eine Hochspannung zwischen der ersten Elektrode (2) und der zweiten Elektrode (5) anlegt, wobei die Stromversorgung (80) eine AC-Stromversorgung oder eine Impulsstromversorgung ist;
- ein Dielektrikum (1), das in einer zylindrischen Form ausgebildet ist, koaxial mit und zwischen der ersten Elektrode (2) und der zweiten Elektrode (5) angeordnet ist, einen ringförmigen Spalt (6) mit einer Elektrode von der ersten Elektrode (2) und der zweiten Elektrode (5) bildet und bewirkt, dass eine dielektrische Barriereentladung erzeugt wird, und zwar durch Anlegen der Hochspannung zwischen der einen Elektrode und der anderen Elektrode;
- einen Wasserfilm-Bildungsbereich (7), der einen ringförmigen Strömungsweg (7c) entlang einer Umfangsrichtung zwischen dem Wasserfilm-Bildungsbereich (7) und der einen Elektrode an der einen Endseite in einer axialen Richtung bildet, der eine Öffnung zum ringförmigen Spalt (6) hin aufweist, wobei die Öffnung des ringförmigen Strömungswegs (7c) einen Öffnungsbereich (G7) aufweist, der schmaler ist als ein Abstand (G6) in der radialen Richtung des ringförmigen Spalts (6), wobei ein Abstand (G6) zwischen der einen Elektrode und dem Dielektrikum (1) gleich oder größer als 1 mm und gleich oder kleiner als 5 mm ist, wobei ein Abstand der Öffnung (G7) gleich oder größer als 0,1 mm und gleich oder kleiner als 3 mm ist**,** wobei der Wasserfilm-Bildungsbereich (7) das aufzubereitende Wasser (90) dazu veranlasst, in Richtung der anderen Endseite zu strömen, und zwar als ein Wasserfilm (91), der die eine Elektrode bedeckt, wenn die eine Endseite nach oben gerichtet ist, um eine axiale Richtung als vertikal vorzugeben, wobei der Wasserfilm (91) dünner ist als die Dicke des Raums, der zwischen dem Wasserfilm (91) und einer Umfangsfläche (1fi) des Dielektrikums (1) gebildet ist; und
- ein Gaseinleitungsteil (4) zum Einleiten von Gas in den ringförmigen Spalt (6), wobei die Hochspannung, die an die Elektroden angelegt ist, eine Entladung im Gas bewirkt und aktive Spezies, die durch die Entladung erzeugt worden sind, mit dem aufzubereitenden Wasser in Kontakt gebracht werden, um die Aufbereitung durchzuführen;
wobei
ein Kopfelement (3) einen Wassereinlassbereich (3i) zum Einlassen von aufzubereitendem Wasser (90) und den Wasserfilm-Bildungsbereich (7) aufweist, der eine Öffnung entlang einer Umfangsfläche (2fo) ausbildet, sodass das aufzubereitende Wasser, das aus dem Wassereinlassbereich (3i) eingelassen worden ist, als der Wasserfilm (91) entlang einer äußeren Umfangsfläche (2fo) der einen Elektrode strömt,
wobei das Dielektrikum (1) und die eine Elektrode so fixiert sind, dass sie eine koaxiale Anordnung zueinander behalten, und zwar durch das Kopfelement (3), das an einem Ende in der axialen Richtung angeordnet ist, wobei ein interner Strömungsweg von dem Wassereinlassbereich (3i) zu dem ringförmigen Strömungsweg (7c) ausgebildet ist;
wobei (i) eine Umfangsfläche (7fi) des Wasserfilm-Bildungsbereichs (7), welcher der einen Elektrode zugewandt ist, näher an der Umfangsfläche (2fo) der einen Elektrode liegt als die Umfangsfläche (1fi) des Dielektrikums (1);
oder wobei (ii) die eine Elektrode einen Vorsprungsbereich (2p) aufweist, der in Richtung des ringförmigen Strömungswegs (7c) in einem Bereich vorsteht, wo der ringförmige Strömungsweg (7c) ausgebildet ist;
oder wobei (iii) in einem Bereich der einen Elektrode, die der anderen Elektrode zugewandt ist, ein geneigter Bereich (2t) ausgebildet ist, dessen Durchmesser sich entlang der axialen Richtung ändert, so dass sich der Abstand zwischen der einen Elektrode und dem Dielektrikum entlang einer Strömungsrichtung vergrößert.

2. Wasseraufbereitungsvorrichtung (10), die das Folgende aufweist:
- eine erste Elektrode (2), die sich in einer axialen Richtung erstreckt;
- eine zweite Elektrode (5), die koaxial zu der ersten Elektrode (2) angeordnet ist, so dass sie die erste Elektrode (2) von außen in einer radialen Richtung umgibt;
- eine Stromversorgung (80), die elektrisch mit der ersten Elektrode (2) und der zweiten Elektrode (5) verbunden ist und eine Hochspannung zwischen der ersten Elektrode (2) und der zweiten Elektrode (5) anlegt, wobei die Stromversorgung (80) eine AC-Stromversorgung oder eine Impulsstromversorgung ist;
- ein Dielektrikum (1), das in einer zylindrischen Form ausgebildet ist, koaxial mit und zwischen der ersten Elektrode (2) und der zweiten Elektrode (5) angeordnet ist, einen ringförmigen Spalt (6) mit einer Elektrode bildet, wobei die erste Elektrode (2) die eine Elektrode und die zweite Elektrode (5) eine andere Elektrode ist, und bewirkt, dass eine dielektrische Barriereentladung (Dc) erzeugt wird, und zwar durch Anlegen der Hochspannung zwischen der einen Elektrode und der anderen Elektrode; und
- einen Wasserfilm-Bildungsbereich (7), der entlang einer Umfangsrichtung zwischen dem Wasserfilm-Bildungsbereich (7) und der einen Elektrode an der einen Endseite in axialer Richtung einen ringförmigen Strömungsweg (7c) bildet, der eine Öffnung zum ringförmigen Spalt (6) hin aufweist, wobei die Öffnung des ringförmigen Strömungswegs (7c) einen Öffnungsbereich (G7) aufweist, der schmaler ist als ein Abstand (G6) in der radialen Richtung des ringförmigen Spalts (6), wobei ein Abstand (G6) zwischen der einen Elektrode und dem Dielektrikum (1) gleich oder größer als 1 mm und gleich oder kleiner als 5 mm ist, wobei ein Abstand der Öffnung (G7) gleich oder größer als 0,1 mm und gleich oder kleiner als 3 mm ist**,** wobei der Wasserfilm-Bildungsbereich (7) das aufzubereitende Wasser (90) dazu veranlasst, in Richtung der anderen Endseite abzuströmen, und zwar als ein Wasserfilm (91), welcher die eine Elektrode bedeckt wenn die eine Endseite nach oben gerichtet ist, um eine axiale Richtung als vertikal vorzugeben, wobei der Wasserfilm (91) dünner ist als die Dicke des Raums, der zwischen dem Wasserfilm (91) und einer inneren Umfangsfläche (1fi) des Dielektrikums (1) gebildet ist; und
- ein Gaseinleitungsteil (4) zum Einleiten von Gas in den ringförmigen Spalt (6), wobei die Hochspannung, die an die Elektroden angelegt ist, eine Entladung im Gas bewirkt und aktive Spezies, die durch die Entladung erzeugt worden sind, mit dem aufzubereitenden Wasser in Kontakt gebracht werden, um die Aufbereitung durchzuführen;
wobei
die erste Elektrode (2) in einem kreisförmigen Rohr ausgebildet ist, indem ein Wasserkanal (2c) ausgebildet ist, der in einer axialen Richtung an einer Innenseite in einer radialen Richtung verläuft, und zumindest ein Teil einer Wand (2w) des Rohrs aus einem porösen Material ausgebildet ist, und zwar von einer äußeren Umfangsfläche hin bis zu dem Wasserkanal (2c), wobei der Wasserkanal (2c) in dem porösen Material ausgebildet ist; und wobei ein Kopfelement (3) einen Wassereinlassbereich (3i) zum Einlassen von aufzubereitendem Wasser (90) aufweist, wobei das aufzubereitende Wasser (90) entlang des ringförmigen Strömungswegs (7c) strömt und in den Wasserkanal (2c) durch Poren in der Wand (2w) eintritt und in den Wasserkanal (2c) strömt.

3. Wasseraufbereitungsvorrichtung (10) nach einem der Ansprüche 1 bis 2, wobei die andere Elektrode durch eine Vielzahl von angeordneten Elektroden (51-53) konfiguriert ist, die in der axialen Richtung voneinander beabstandet sind.

4. Verfahren zur Wasseraufbereitung unter Verwendung einer Wasseraufbereitungsvorrichtung (10) nach einem der vorherigen Ansprüche, wobei das Verfahren zur Wasseraufbereitung die folgenden Schritte umfasst:
- Erzeugen aktiver Spezies durch Anlegen einer Hochspannung zwischen der ersten Elektrode und der zweiten Elektrode, um eine dielektrische Barriereentladung (DC) zu bewirken;
- Einleiten von aufzubereitendem Wasser (90) von der einen Endseite in einer Ausbreitungsrichtung des Spalts; und
- Bewirken, dass die erzeugten aktiven Spezies auf das eingeleitete aufzubereitende Wasser (90) wirken,
wobei
beim Schritt des Einleitens des aufzubereitenden Wassers (90) die eine Endseite nach oben gerichtet ist, um die Ausbreitungsrichtung als vertikal vorzugeben, und wobei das Dielektrikum (1) und die eine Elektrode so fixiert sind, dass sie eine koaxiale Anordnung zueinander bewahren, und zwar durch ein Kopfelement (3), das an einer Seite in der axialen Richtung angeordnet ist, wobei das aufzubereitende Wasser (90) dazu gebracht wird, zu der anderen Endseite hin abwärts zu strömen, und zwar als ein Wasserfilm (91) mit einer Dicke, die kleiner ist als die Hälfte eines Abstands (G6) zwischen der einen Elektrode und dem Dielektrikum, und der die eine Elektrode bedeckt.

## Revendications

1. Appareil de traitement des eaux (10) comprenant :
- une première électrode (2) s'étendant dans une direction axiale ;
- une deuxième électrode (5) agencée coaxialement à la première électrode (2) de manière à entourer la première électrode (2) depuis l'extérieur dans une direction radiale ;
- une alimentation électrique (80) qui est connectée électriquement à la première électrode (2) et à la deuxième électrode (5) et qui applique une tension élevée entre la première électrode (2) et la deuxième électrode (5), l'alimentation électrique (80) étant une alimentation électrique CA ou une alimentation électrique à impulsions ;
- un diélectrique (1) qui est réalisé dans une forme cylindrique, est agencé coaxialement et interposé entre la première électrode (2) et la deuxième électrode (5), forme un espace annulaire (6) avec une électrode de la première électrode (2) et de la deuxième électrode (5), et amène à générer une décharge de barrière diélectrique en appliquant la tension élevée entre ladite une électrode et une autre électrode ;
- une portion de formation de film d'eau (7) qui forme un trajet d'écoulement annulaire (7c) le long d'une direction circonférentielle entre la portion de formation de film d'eau (7) et ladite une électrode sur un côté d'extrémité dans une direction axiale avec une ouverture vers l'espace annulaire (6), l'ouverture du trajet d'écoulement annulaire (7c) ayant une plage d'ouverture (G7) qui est plus restreinte qu'un intervalle (G6) dans la direction radiale de l'espace annulaire (6), un intervalle (G6) entre ladite une électrode et le diélectrique (1) étant supérieur ou égal à 1 mm et inférieur ou égal à 5 mm, un espacement de l'ouverture (G7) étant supérieur ou égal à 0,1 mm et inférieur ou égal à 3 mm, la portion de film d'eau (7) amenant l'eau à être traitée pour s'écouler vers le bas en direction de l'autre côté d'extrémité en tant que film d'eau (91) recouvrant ladite une électrode quand ledit un côté d'extrémité est dirigé vers le haut pour définir une direction axiale comme étant verticale, le film d'eau (91) étant plus mince que l'épaisseur de l'espace formé entre le film d'eau (91) et une surface circonférentielle (1fi) du diélectrique (1) ; et
- une partie d'introduction de gaz (4) destinée à introduire du gaz dans l'espace annulaire (6), la tension élevée appliquée aux électrodes entraînant une décharge dans le gaz et des espèces actives générées par la décharge étant amenées en contact avec de l'eau à traiter pour effectuer le traitement ; dans lequel
un élément collecteur (3) est pourvu d'une portion d'admission d'eau (3i) destinée à admettre de l'eau à traiter (90) et la portion de formation de film d'eau (7) formant une ouverture le long d'une surface circonférentielle (2fo) de sorte que l'eau à traiter est admise depuis la portion d'admission d'eau (3i) s'écoule en tant que film d'eau (91) le long d'une surface circonférentielle extérieure (2fo) de ladite une électrode,
dans lequel le diélectrique (1) et ladite une électrode sont fixés pour maintenir une relation coaxiale par l'élément collecteur (3) agencé au niveau d'une extrémité dans la direction axiale, un trajet d'écoulement interne étant formé depuis la portion d'admission d'eau (3i) jusqu'au trajet d'écoulement annulaire (7c) ;
dans lequel (i) une surface circonférentielle (7fi) de la portion de formation de film d'eau (7) faisant face à ladite une électrode est située plus proche de la surface circonférentielle (2fo) de ladite une électrode que de la surface circonférentielle (1fi) du diélectrique (1) ;
ou dans lequel (ii) ladite une électrode est pourvue d'une portion en saillie (2p) se projetant vers le trajet d'écoulement annulaire (7c) dans une région dans laquelle est formé le trajet d'écoulement annulaire (7c) ;
ou dans lequel (iii) dans une région de ladite une électrode faisant face à ladite autre électrode, une portion inclinée (2t) dont un diamètre change le long de la direction axiale est prévu de telle sorte que l'intervalle entre ladite une électrode et le diélectrique augmente le long d'une direction d'écoulement.

2. Appareil de traitement des eaux (10) comprenant :
- une première électrode (2) s'étendant dans une direction axiale ;
- une deuxième électrode (5) agencée coaxialement à la première électrode (2) de manière à entourer la première électrode (2) depuis l'extérieur dans une direction radiale ;
- une alimentation électrique (80) qui est connectée électriquement à la première électrode (2) et à la deuxième électrode (5) et qui applique une tension élevée entre la première électrode (2) et la deuxième électrode (5), l'alimentation électrique (80) étant une alimentation électrique CA ou une alimentation électrique à impulsions ;
- un diélectrique (1) qui est réalisé dans une forme cylindrique, est agencé coaxialement et interposé entre la première électrode (2) et la deuxième électrode (5), forme un espace annulaire (6) avec une électrode quand la première électrode (2) est ladite une électrode et que la deuxième électrode (5) est une autre électrode, et amène à générer une décharge de barrière diélectrique (Dc) en appliquant la tension élevée entre ladite une électrode et l'autre électrode ;
- une portion de formation de film d'eau (7) qui forme un trajet d'écoulement annulaire (7c) le long d'une direction circonférentielle entre la portion de formation de film d'eau (7) et ladite une électrode sur un côté d'extrémité dans une direction axiale avec une ouverture vers l'espace annulaire (6), l'ouverture du trajet d'écoulement annulaire (7c) ayant une plage d'ouverture (G7) qui est plus restreinte qu'un intervalle (G6) dans la direction radiale de l'espace annulaire (6), un intervalle (G6) entre ladite une électrode et le diélectrique (1) étant supérieur ou égal à 1 mm et inférieur ou égal à 5 mm, un espacement de l'ouverture (G7) étant supérieur ou égal à 0,1 mm et inférieur ou égal à 3 mm, la portion de film d'eau (7) amenant de l'eau à être traitée (90) pour s'écouler vers le bas en direction de l'autre côté d'extrémité en tant que film d'eau (91) recouvrant ladite une électrode quand ledit un côté d'extrémité est dirigé vers le haut pour définir une direction axiale comme étant verticale, le film d'eau (91) étant plus mince que l'épaisseur de l'espace formé entre le film d'eau (91) et une surface circonférentielle intérieure (1fi) du diélectrique (1) ; et
- une partie d'introduction de gaz (4) destinée à introduire du gaz dans l'espace annulaire (6), la tension élevée appliquée aux électrodes entraînant une décharge dans le gaz et des espèces actives générées par la décharge étant amenées en contact avec de l'eau à traiter pour effectuer le traitement ;
dans lequel
la première électrode (2) est formée dans un tube circulaire en formant un conduit d'eau (2c) qui traverse dans une direction axiale sur un côté intérieur dans une direction radiale, et au moins une partie d'une paroi (2w) du tube est formée d'un matériau poreux depuis une surface circonférentielle extérieure jusqu'à la conduite d'eau (2c), la conduite d'eau (2c) étant formée dans le matériau poreux ; et
un élément collecteur (3) est pourvu d'une portion d'admission d'eau (3i) destinée à admettre de l'eau à traiter (90), l'eau à traiter (90) s'écoulant le long du trajet d'écoulement annulaire (7c) et entrant dans la conduite d'eau (2c) à travers des pores dans la paroi (2w) et s'écoulant dans la conduite d'eau (2c).

3. Appareil de traitement des eaux (10) selon l'une quelconque des revendications 1 à 2,
dans lequel ladite autre électrode est configurée avec une pluralité d'électrodes (51-53) agencées à distance les unes des autres dans la direction axiale.

4. Procédé de traitement des eaux utilisant un appareil de traitement des eaux (10) selon l'une quelconque des revendications précédentes, le procédé de traitement des eaux comprenant les étapes consistant à :
- générer des espèces actives en appliquant une tension élevée entre la première électrode et la deuxième électrode pour entraîner une décharge de barrière électrique (Dc) ;
- introduire de l'eau à traiter (90) depuis un côté d'extrémité dans une direction dans le prolongement de l'espace ; et
- amener les espèces actives générées à agir sur l'eau introduite qu'il s'agit de traiter (90),
dans lequel
dans l'étape consistant à introduire l'eau à traiter (90), ledit un côté d'extrémité étant dirigé vers le haut pour définir la direction d'extension comme étant verticale, et le diélectrique (1) et ladite une électrode étant fixés pour maintenir une relation coaxiale par un élément collecteur (3) agencé au niveau d'un côté dans la direction axiale, l'eau à traiter (90) est amenée à s'écouler vers le bas en direction de l'autre côté d'extrémité en tant que film d'eau (91) qui a une épaisseur inférieure à une moitié d'un intervalle (G6) entre ladite une électrode et le diélectrique, et qui recouvre ladite une électrode.
